# EUROPÄISCHE PATENTSCHRIFT

(11) **EP 1 498 314 B1**
(45) Veröffentlichungstag und Bekanntmachung des Hinweises auf die Patenterteilung: **21.06.2006**
(21) Anmeldenummer: 04009354.4
(22) Anmeldetag: 20.04.2004
(51) Int. Cl.: B60R 1/06, B60R 1/076

(54) **Rastgelenkverbindung**
Locking hinge connection
Jonction d'articulation à verrouillage

(30) Priorität: 14.07.2003 DE 10331868
(43) Veröffentlichungstag der Anmeldung: 19.01.2005
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Hecht, Georg, 91629 Weihenzell (DE); Centmayer, Stefan, 91465 Ergersheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- GB-A- 2 041 857
- US-A- 3 107 077
- US-A- 3 811 715
- US-A- 4 477 199
- US-B1- 6 349 916

## Beschreibung

Die vorliegende Erfindung betrifft eine Rastgelenkverbindung, insbesondere für Außenspiegel eines Kraftfahrzeugs, sowie einen Außenspiegel mit einer solchen Rastgelenkverbindung.

Außenspiegel von Kraftfahrzeugen werden mittels einem oder mehrerer Arme am Fahrzeug befestigt.

Vorteilhafterweise sind in den Armen Drehgelenke vorhanden, die es ermöglichen, den Außenspiegel von einer Grundstellung, in welcher der Spiegel im wesentlichen senkrecht zur Fahrzeugseite angeordnet ist und dem Fahrer den Blick auf die Umgebung hinter dem Fahrzeug ermöglicht, in eine zweite Stellung zu schwenken, in der der Spiegel im wesentlichen parallel zur Fahrzeugseite steht.

Hierdurch ist es zum einen möglich, den Außenspiegel zum Transport, Parken o.ä. an die Fahrzeugseite zu klappen, um so die Gesamtbreite des Fahrzeugs zu verringern. Zum anderen kann der Spiegel bei einem Zusammenstoß mit einem seitlichen Hindernis wegklappen und so eine Beschädigung von Spiegel bzw. Hindernis vermeiden bzw. verringern.

Vorteilhafterweise sind die Drehgelenke als Rastgelenkverbindungen ausgeführt, die in wenigstens der oben beschriebenen Grund- und zweiten Stellung einrasten, d.h., einem Drehmoment um die Drehachse einen deutlich erhöhten Widerstand entgegensetzen. Daneben können noch weitere Raststellungen vorgesehen sein, die es beispielsweise als verschiedene Grundstellungen ermöglichen, die Verstellmöglichkeiten der Spiegelscheibe relativ zum Spiegel gering zu halten: Um die Spiegelfläche relativ zu seiner Sitzposition einzurichten, kann der Fahrer den gesamten Spiegel zunächst in die geeignetste Grundstellung bringen und anschließen, beispielsweise mittels motorischer Verstellvorrichtungen, die Spiegelscheibe exakt für seine Position ausrichten. Eine Rastgelenkverbindung für einem Aussenspiegel, welche die Merckmale des Oberbegriffes des Anspruchs 1 zeigt ist aus der GB 2 041 857 A bekannt. Eine weitere Rastgelenkverbindung mit zwei Rastnasen zeigt die US 6 349 916 B1.

Eine ebenfalls bekannte Rastgelenkverbindung gibt die EP 1 092 589 A an. Diese umfaßt einen ersten Gelenkarm, an dem ein Spiegel befestigbar ist, sowie einen zweiten Gelenkarm zur Befestigung am Fahrzeug. Die beiden Gelenkarme sind mittels einer Steckachse drehbar miteinander verbunden, die zwei Ausleger des ersten Gelenkarms, zwei Ausleger des zweiten Gelenkarms und einen dazwischen angeordneten zylindrischen Körper axial durchsetzt. Dieser zylindrische Körper wird mittels zweier seinen Umfang teilweise umgreifenden Klemmblöcke reibschlüssig am zweiten Gelenkarm drehfestgelegt. Der zylindrische Körper weist an seiner dem ersten Gelenkarm zugewandten Seite mehrere an seinem Außenumfang verteilte Aussparungen auf. Ein komplementär geformtes Rastelement ist in radialer Richtung verschieblich im ersten Gelenkarm gelagert und wird in dieser Richtung federbeaufschlagt, so daß es in jeweils eine der Ausparungen des zylindrischen Körpers eingreift und die beiden Gelenkarme in radialer Richtung verspannt.

Wird der erste um den zweiten Gelenkarm gedreht, so wird das Rastelement gegen den Federwiderstand aus einer Aussparung bewegt und durch die Federkraft in die nächste Aussparung gedrückt, sobald diese dem Rastelement gegenüber liegt, so daß sich verschiedene Raststellungen ergeben. Indem der zylindrische Körper in verschiedenen Positionen am zweiten Gelenkarm drehfestgelegt wird, können die Rastpositionen bezüglich des zweiten Gelenkarms beliebig festgelegt werden.

Nachteilig besteht diese Rastgelenkverbindung jedoch aus vielen Teilen, was nicht nur eine aufwendige Herstellung bedingt, sondern aufgrund der Toleranzketten auch zu unerwünschtem Spiel des Gelenks führt. Darüberhinaus muß die Hubrichtung des Rastelements stets radial durch die Drehachse führen, damit kein destabilisirendes Drehmoment induziert wird. Diese Eingriffslinie Drehachse-Rasteingriff-Hub des Rastelements bedingt in Richtung des Hubs einen relativ großen Bauraum, was nachteilig zu einer großen Gesamtbreite des Fahrzeugs auch bei eingeklappten Außenspiegeln führt und aufgrund der großen Hebelarme die Rastverbindung destabilisiert.

Ausgehend von diesem Stand der Technik ist es eine Aufgabe der vorliegenden Erfindung, eine Rastgelenkverbindung zu schaffen, die möglichst spielfrei ist und bei der die Drehachse beliebig auch außerhalb der Eingriffslinie angeordnet ist. Eine weitere Aufgabe der vorliegenden Erfindung ist es, einen Außenspiegel mit einer Rastverbindung zur Verfügung zu stellen, die möglichst spielfrei ist und bei der die Drehachse beliebig auch außerhalb der Eingriffslinie angeordnet ist.

Diese Aufgabe wird erfindungsgemäß durch eine Rastgelenkverbindung gem. Anspruch 1 bzw. einen Außenspiegel gem. Anspruch 12 gelöst.

Eine Rastgelenkverbindung gemäß der vorliegenden Erfindung umfaßt einen ersten und zweiten Gelenkarm, die über ein Rastgelenk miteinander verbunden sind, wobei eine Drehachse axial in einem der beiden Gelenkarame festgelegt ist, um die der andere der beiden Gelenkarme drehbar gelagert ist. Ein Rastelement ist in einer Ebene senkrecht zur Drehachse in Eingriffsrichtung verschieblich in dem ersten Gelenkarm gelagert, wird in dieser Richtung von einem Federelement mit einer Kraft beaufschlagt und weist eine Rastfläche mit wenigstens zwei von dieser Fläche nach außen hervorragenden Rastnasen auf. Hierzu weist der zweiten Arm eine Gegenrastfläche so auf, daß in wenigstens einer Raststellung die wenigstens zwei Rastnasen des Rastelements in komplementär geformte Rastausnehmungen der Gegenrastfläche eingreifen.

Da bei der erfindungsgemäßen Rastgelenkverbindung stets wenigstens zwei Rastnasen gleichzeitig in entsprechende Rastausnehmungen des Gegenrastelements eingreifen, werden an den jeweils anliegenden Flanken dieser Rastnasen entgegengesetzte Kraftkomponenten in Umfangsrichtung aufgeprägt, so daß die Rastgelenkverbindung selbstzentrierend und damit im wesentlichen spielfrei ist. Hierzu können die Rastnasen und die zugehörigen Rastausnehmungen in einer bevorzugten Ausführungsform im wesentlichen keilförmig ausgebildet sein.

Darüberhinaus wird das notwendige Haltedrehmoment auf mehrere Rastnasen verteilt, was die Belastung auf die einzelnen Rastnasen und damit auch deren Abnutzung vorteilhaft vermindert.

Durch die Selbtszentrierung der erfindungsgemäßen Rastgelenkverbindung ist die Drehachse außerhalb der Eingriffslinie angeordnet. Während hier bei einer Rastgelenkverbindung nach dem Stand der Technik die Vorspannkraft in Eingriffsrichtung zu einem unerwünschten Drehmoment um die Drehachse führen würde, das das Gelenk verdreht bzw. destabilisiert, wird ein solches Drehmoment bei einer erfindungsgemäßen Rastgelenkverbindung an den Flanken der Rastnasen abgestützt.

Hierzu ist das Rastelement in einer Gleitführung gelagert, so daß es nur in Eingriffsrichtung verschieblich ist.

In einer besonders bevorzugten Ausführung der vorliegenden Erfindung ist in der Gleitführung ein vorderer und/oder hinterer Anschlag in Eingriffsrichtung vorhanden. Ein vorderer Anschlag verhindert ein Herausdrücken des Rästelements aus seiner Führung durch das Federlement, während ein hinterer Anschlag die maximale Einfederung begrenzt.

Beides erleichtert die Montage der Rastgelenkverbindung, da das einmal eingesetzte Rastelement unter Federvorspannung im erstem Gelenkarm verbleibt. Vorteilhafterweise können der vordere und/oder hintere Anschlag in einer Nut in der Gleitführung ausgebildet sein, wobei ein fest mit dem ersten Gelenkarm verbundener oder integral ausgebildeter Stift in dieser Nut gleitet. In einer anderen Ausführung kann beispielsweise nur ein Anschlag in einem offene Langloch vorhanden sein, in dem der Stift gleitet. Beides ermöglicht im Gegensatz zum Stand der Technik den sukzessiven Zusammenbau, insbesondere die Bereitstellung des ersten Gelenkarms komplett mit vorgespanntem Rastelement als Halbzeug bzw. Ersatzbauteil.

Wie erwähnt, schneidet beider erfindungsgemäße Rastgelenkverbindung die Eingriffsrichtung nicht die Drehachse. Bei dieser Ausführung ist es also möglich, eine sehr kompakte, in Eingriffsrichtung kurze Bauform zu erzielen und trotzdem verschneidungsfrei zu bleiben. Hierzu kann vorteilhafterweise die Drehachse in Relation zur Eingriffsrichtung und dem Rastelement derart angeordnet sein, daß der zweite Arm mit der Gegenrastfläche gegenüber dem erstem Arm, in dem das Rastelement gelagert ist, so gedreht werden kann, daß das Rastelement eingeführt bzw. entfernt werden kann. Dies vereinfacht zusätzlich die Montage.

Das Federelement kann eine Blattfeder umfassen, die sich in dem Rastelement und dem ersten Arm, in dem das Rastelement gelagert ist, so abstützt, daß es das Rastelement in Eingriffsrichtung vorspannt. Durch das Auseinanderspreizen einer solchen Blattfeder wird vorteilhaft das Rastelement seitlich zur Eingriffsrichtung an seine Führung gedrückt, was die Stabilität erhöht.

Gleichermaßen kann das Federelement auch eine Spiralfeder umfassen oder mit dem Rastelement gemeinsam einstückig ausgeführt sein.

In einer besonders bevorzugten Ausführungsform weist das Rastelement mehr als zwei Rastnasen auf.

In einer ebenfalls besonders bevorzugten Ausführungsform weist die Gegenrastfläche mehr als zwei komplementär geformte Rastausnehmungen auf, so daß die wenigstens zwei Rastnasen des Rastelements in mehr als einer Raststellung in komplementär geformte Rastausnehmungen der Gegenrastfläche eingreifen und so mehrere Raststellungen realisieren können.

Weitere Vorteile, Merkmale und Ausführungen ergeben sich aus den Unteransprüchen sowie den nachfolgend beschriebenen Ausführungsformen. Hierzu zeigt:
Fig. 1 eine erfindungsgemäße Rastgelenkverbindung im Axialschnitt;
Fig. 2 die Rastgelenkverbindung in einem hierzu senkrechten Schnitt; und

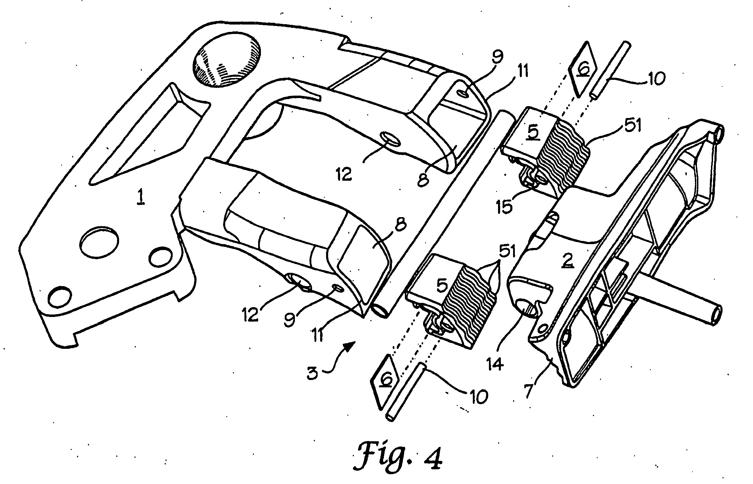

Fign. 3 und 4 je eine perspektivische Explosionsdarstellung der Rastgelenkverbindung nach Fign. 1, 2.

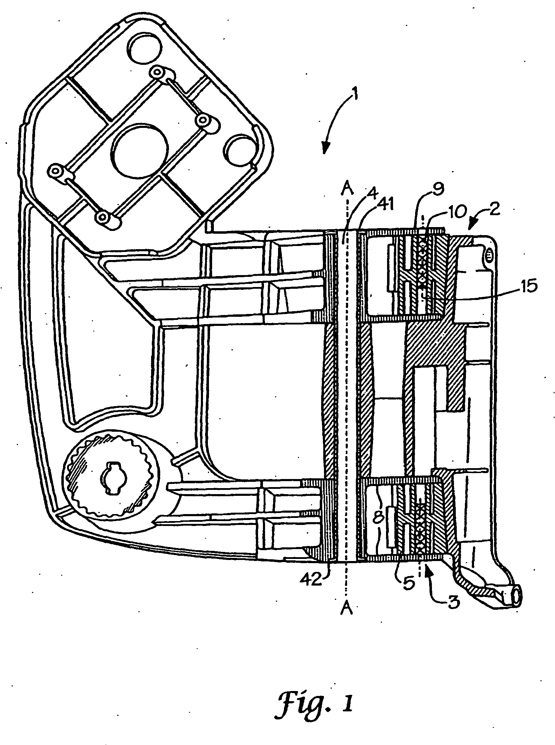

Wie in Fig. 1 gezeigt, kann ein Außenspiegel (nicht dargestellt) an einem Kraftfahrzeug (nicht dargestellt) mittels einer erfindungsgemäßen Rastgelenkverbindung befestigt werden. Hierzu wird der Außenspiegel an einem ersten Gelenkarm 1 beispielsweise mittels Schrauben befestigt oder ist integral mit diesem ausgebildet.

Im ersten Gelenkarm 1 ist eine Steckachse 4 als Drehachse axial festgelegt, indem sie beispielsweise einen oberen Flansch 41 aufweist und nach dem Einstecken von oben unten zu einem unteren Flansch 42 umgeformt wird. Gleichermaßen kann die Drehachse mittels Verschrauben, Verkleben oder dergleichen festgelegt werden. Eine vordere Stirnfläche 11 des ersten Gelenkarms 1 ist im wesentlichen zylindrisch bezüglich der Drehachse 4.

Die Drehachse 4 durchgreift auch einen zweiten Gelenkarm 2, so daß erster und zweiter Gelenkarm drehbar um diese Achse miteinander verbunden sind. Dabei umgreift der erste Gelenkarm 1 im Bereich der Drehachse 4 den zweiten Gelenkarm 2 mit zwei in axialer Richtung beabstandteten Auslegern, so daß die beiden Gelenkarme axial aneinander festgelegt sind.

Die Drehachse kann auch integral mit dem ersten oder zweiten Arm ausgebildet sein. In diesem Falle kann dann die die Achse umgreifende Führung des anderen Armes mehrteilig ausgebildet sein und um die Drehachse zusammengefügt werden. Gleichermaßen kann die Drehachse an einem der Gelenkarme nicht nur axial, sondern auch drehfestgelegt sein, was das Spiel des Gelenks vorteilhaft vermindert.

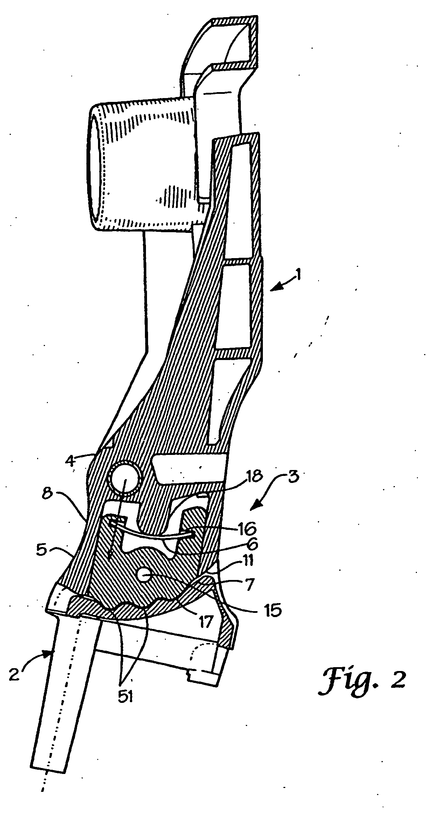

In einer oberen bzw. unteren Gleitführung 8 im ersten Gelenkarm 1 ist je ein oberes bzw. unteres Rastelement 5 derart gelagert, daß es in einer Eingriffsrichtung verschieblich ist, die in der Zeichenebene der Fig. 2 liegt, die Drehachse 4 jedoch nicht schneidet.

Die obere bzw. untere Gleitführung 8 weist an ihrere oberen bzw. unteren Seite eine Nut 9 in Eingriffsrichtung auf, in der je ein oberer bzw. unterer Stift 10 gleitet, der in das obere bzw. untere Rastelement 5 eingesetzt ist. Hierdurch wird ein vorderer und hinterer Anschlag für die Verschiebung des Rastelements 5 in Eingriffsrichtung realisiert. Eine entgegengesetzte, sich zueinander hin verjüngende, leichte Konizität des oberen und unteren Stifts 10 gewährleistet vorteilhafterweise die axiale Spielfreiheit der Rastgelenkverbindung.

In die Eingriffsrichtung wird das Rastelement 5 durch je eine Blattfeder 6 mit einer Vorspannkraft beaufschlagt. Hierzu verspreizt sich die Blattfeder 6 in Seitenwände des Rastelements und drückt diese vorteilhaft an die Gleitführung 8, was das Spiel der Rastgelenkverbindung vermindert. Durch eine Nase in der Gleitführung 8 wird die Blattfeder selbst bei Anliegen des Stiftes 10 am vorderen, dem zweiten Gelenkarm zugewandten, Anschlag deformiert, so daß sich in jeder Position zwischen vorderem und hinterem Anschlag eine Federkraft in Eingriffsrichtung einstellt.

Jedes Rastelement 5 weist drei Rastnasen 51 auf, die in der Ebene der Fig. 2 in wesentlichen keilförmig ausgebildet sind. Der zweite Gelenkarm 2 weist eine bezüglich der Drehachse 4 im wesentlichen zylindrischen Gegenrastfläche 7 mit entsprechend geformten komplementären Rastausnehmungen auf. Hierdurch weist der zweite Arm vorteilhafterweise weniger Bauteile auf als bei der Rastgelenkverbindung nach dem Stand der Technik

Durch die Vorspannung der Federn 6 werden die Rastelemente 5 in Eingriffsrichtung nach vorne gedrückt. Liegen den Rastnasen 51 Rastausnehmungen der Gegenrastfläche 7 gegenüber, so werden die Rastnasen durch die Federkraft in diese gedrückt und darin gehalten. Damit ist die Rastgelenkverbindung in einer Raststellung eingerastet.

Beim Aufbringen eines Drehmoments um die Drehachse werden die Rastnasen 51 gegen die Vorspannung der Blattfedern 6 in Eingriffsrichtung nach hinten aus den Rastausnehmungen herausgedrückt und die beiden Gelenkarme können gegeneinander verdreht werden. Sobald den Rastnasen 51 neue Rastausnehmungen der Gegenrastfläche 7 gegenüber liegen, werden die Rastnasen durch die Federkraft in diese hineingedrückt und darin gehalten. Damit ist die Rastgelenkverbindung in einer neuen Raststellung eingerastet.

Vorteilhafterweise üben die Flanken der Rastnasen 51, sobald sie an entsprechend komplementären Gegenflanken der Gegenrastfläche 7 anliegen, solange ein Drehmoment aus, bis sie möglichst weit in die Rastausnehmungen eingreifen. Hierdurch zentriert sich die erfindungsgemäße Rastgelenkverbindung selbsttätig, auch, wenn erfindungsgemäß die Eingriffslinie die Drehachse nicht schneidet.

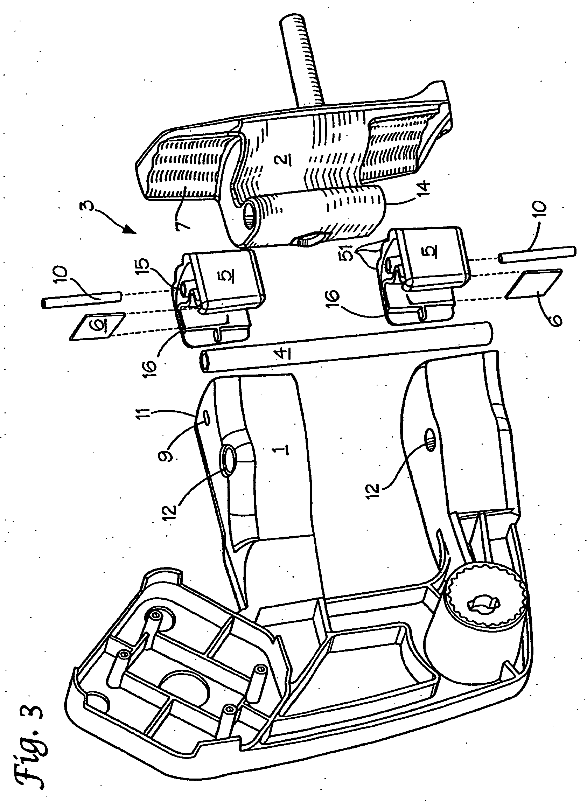

Somit wird eine spielfreie Rastgelenkverbindung zur Verfügung gestellt. Wie im Ausführungsbeispiel nach Fign. 1-3 gezeigt, kann dabei vorteilhafterweise die Drehachse 4 so außerhalb der Eingriffslinie angeordnet sein, daß sich in Eingriffsrichtung eine kompakte, kurze Bauform ergibt.

Zur Montage können entweder zunächst die Rastelemente 5 mit den Blattefedern 6 in die Gleitführungen 8 eingesetzt und durch die Stifte 10 gesichert werden. Dann kann dieses Halbzeug einfach am zweiten Gelenkarm befertigt werden, indem die Steckachse 4 durch beide Gelenkarme geführt und zumindest axial fixiert wird.

Gleichermaßen können zunächste die beiden Gelenkarme durch die Steckachse 4 drehbar aneinander befestigt werden. Anschließend können aufgrund der vorteilhaften Anordnung der Drehachse die beiden Gelenkarme soweit gegeneinander verdreht werden, daß die Gleitführungen 8 des ersten Gelenkarmes freiliegen. In diese werden die Rastelemente 5 mit Blattfedern 6 eingeführt und durch Stift 10 gesichert. Anschließend wird der erste Arm wieder in eine Stellung zurückgedreht, bei der die Stirnseite 11 des ersten Gelenkarmes 1 der Gegenrastfläche 7 des zweiten Armes 2 gegenüberliegt.

## Patentansprüche

1. Rastgelenkverbindung, insbesondere für Außenspiegel eines Kraftfahrzeugs, mit
einem ersten und einem zweiten Gelenkarm (1, 2), die über ein Rastgelenk (3) miteinander verbunden sind,
einer Drehachse (4), die axial in einem der beiden Gelenkarame festgelegt ist und um die der andere der beiden Gelenkarme drehbar gelagert ist;
einem Rastelement (5), welches in einer Ebene senkrecht zur Drehachse in seiner Eingriffsrichtung verschieblich in dem ersten Gelenkarm gelagert ist, wobei das Rastelement in einer Gleitführung (8) in seiner Eingriffsrichtung gelagert ist; und
einem Federelement (6), welches eine Kraft in Eingriffsrichtung auf das eine Rastelement ausübt;
**dadurch gekennzeichnet, daß**
das Rastelement eine Rastfläche mit wenigstens zwei von dieser Fläche nach außen hervorragenden Rastnasen (51) aufweist; und
der zweiten Arm eine Gegenrastfläche (7) so aufweist, daß in wenigstens einer Raststellung die wenigstens zwei Rastnasen des Rastelements in komplementär geformte Rastausnehmungen der Gegenrastfläche eingreifen; und daß die Eingriffsrichtung der Rastelementes (5) nicht die Drehachse schneidet.

2. Rastgelenkverbindung nach Anspruch 1; **dadurch gekennzeichnet, daß** in der Gleitführung ein vorderer und/oder hinterer Anschlag in Eingriffsrichtung vorhanden ist.

3. Rastgelenkverbindung nach Anspruch 2, **dadurch gekennzeichnet, daß** der vordere und/oder hintere Anschlag in einer Nut (9) in der Gleitführung ausgebildet ist.

4. Rastgelenkverbindung nach Anspruch 3, **dadurch gekennzeichnet, daß** das Rastelement auf der der Nut zugewandten Seite eine Bohrung aufweist, und daß in diese Bohrung ein Stift (10) so eingesetzt ist, daß er in der Nut gleitet und durch den vorderen und/oder hinteren Anschlag die Bewegung des Rastelements in Eingriffsrichtung begrenzt.

5. Rastgelenkverbindung nach Anspruch 1, **dadurch gekennzeichnet, daß** die Drehachse in Relation zur Eingriffsrichtung und dem Rastelement derart angeordnet ist, daß der zweite Arm gegenüber dem erstem Arm so gedreht werden kann, daß das Rastelement eingeführt bzw. entfernt werden kann.

6. Rastgelenkverbindung nach wenigstens einem der vorhergehenden Ansprüche, **dadurch gekennzeichnet, daß** die Drehachse im ersten Arm festgelegt ist.

7. Rastgelenkverbindung nach wenigstens einem der vorhergehenden Ansprüche, **dadurch gekennzeichnet, daß** das Federelement eine Blattfeder umfaßt, die sich in dem Rastelement und dem ersten Arm so abstützt, daß sie das Rastelement in Eingriffsrichtung vorspannt.

8. Rastgelenkverbindüng nach wenigstens einem der vorhergehenden Ansprüche, **dadurch gekennzeichnet, daß** das Federelement eine Spiralfeder umfaßt, die sich in dem Rastelement und dem ersten Arm so abstützt, daß es das Rastelement in Eingriffsrichtung vorspannt.

9. Rastgelenkverbindung nach wenigstens einem der vorhergehenden Ansprüche, **dadurch gekennzeichnet, daß** der erste Arm, das Rastelement und das Federelement gemeinsam einstückig ausgeführt sind und das Federelement durch entsprechendes Material und/oder entsprechende Geometrie des Rastelements gebildet ist.

10. Rastgelenkverbindung nach wenigstens einem der vorhergehenden Ansprüche, **dadurch gekennzeichnet, daß** das Rastelement mehr als zwei Rastnasen (51) aufweist.

11. Rastgelenkverbindung nach wenigstens einem der vorhergehenden Ansprüche, **dadurch gekennzeichnet, daß** die Gegenrastfläche mehr als zwei komplementär geformte Rastausnehmungen aufweist, so daß die wenigstens zwei Rastnasen des Rastelements in mehr als einer Raststellung in komplementär geformte Rastausnehmungen der Gegenrastfläche eingreifen.

12. Außenspiegel für ein Kraftfahrzeug, insbesondere ein Nutzfahrzeug, mit einer Rastgelenkverbindung nach wenigstens einem der Ansprüche 1 bis 11, **dadurch gekennzeichnet, daß** der Außenspiegel am ersten Gelenkarm befestigt ist.

## Claims

1. A detent joint in particular for external mirrors of an automotive vehicle, comprising:
first and second hinge pieces (1, 2) interconnected by a detent joint (3), an axis of rotation (4) axially secured in one of said two hinge pieces, and about which the other one of said two hinge pieces is mounted in a rotatable manner;
a detent element (5) carried by said first hinge piece, said detent element being secured in a plane perpendicular to the axis of rotation and movable along its axis of engagement, wherein said detent element is mounted in a slide bearing (8) for movement in the direction of its engagement; and
a spring element (6) exerting a force on the one detent element in the direction of engagement;
**characterized in that**
said detent element has an engagement surface with at least two detent projections (51) protruding from this surface; and
the second hinge element has a counter surface (7) such that in at least one detent position the at least two detent projections of said detent element engage in detent recesses of said counter surface having a complementary shape; and
**in that** said engagement direction of said detent element (5) does not intersect said axis of rotation.

2. The detent joint according to claim 1, **characterized in that** a front and/or a rear stop is provided in said slide bearing in the engagement direction.

3. The detent joint according to claim 2, **characterized in that** said front and/or rear stop is formed in a groove (9) in said slide bearing.

4. The detent joint according to claim 3, **characterized in that** said stop comprises a bore on the side facing said groove, and into this bore a pin (10) is inserted such as to slide in said groove and limit the movement of the detent element in the engagement direction through the front and/or rear stop.

5. The detent joint according to claim 1, **characterized in that** said axis of rotation is positioned relative to the direction of engagement and the detent element, to allow said second hinge piece to be rotated relative to said first hinge piece into a position allowing said detent element to be inserted and removed.

6. The detent joint according to at least one of the preceding claims, **characterized in that** said axis of rotation is secured in said first hinge piece.

7. The detent joint according to at least one of the preceding claims, **characterized in that** said spring element comprises a flat spring carried between said detent element and said first hinge piece so as to pretension said detent element in the direction of the engagement.

8. The detent joint according to at least one of the preceding claims, **characterized in that** said spring element comprises a coil spring carried between said detent element and said first hinge piece so as to pretension said detent element in the direction of the engagement.

9. The detent joint according to at least one of the preceding claims, **characterized in that** said first hinge piece, said detent element, and said spring element are jointly executed in one piece, and said spring element is formed by corresponding material and/or corresponding geometry of said detent element.

10. The detent joint according to at least one of the preceding claims, **characterized in that** said detent element includes more than two detent projections (51).

11. The detent joint according to at least one of the preceding claims, **characterized in that** said counter surface includes more than two complementarily shaped detent recesses, so that said at least two detent protrusions of said detent element engage complementarily shaped detent recesses of said counter surface in more than one detent position.

12. An external mirror for an automotive vehicle, in particular a utility vehicle, comprising a detent joint according to at least one of claims 1 to 11, **characterized in that** said external mirror is secured to said first hinge piece.

## Revendications

1. Jonction d'articulation à verrouillage, en particulier pour rétroviseur extérieur d'un véhicule automobile, avec :
un premier et un deuxième bras articulé (1, 2), reliés ensemble par une articulation à verrouillage (3),
un axe de rotation (4), fixé axialement dans l'un des deux bras articulés et autour duquel l'autre des deux bras articulés est monté à rotation ;
un élément de verrouillage (5), monté mobile dans le premier bras articulé, dans un plan perpendiculaire à l'axe de rotation dans sa direction d'engagement, et où l'élément de verrouillage est monté dans un guidage coulissant (8) dans sa direction d'engagement ; et
un élément à ressort (6), exerçant une force dans la direction d'engagement, sur un élément de verrouillage ;
**caractérisé en ce que**
l'élément à verrouillage présente une face de verrouillage, avec au moins deux ergots de verrouillage (51) en saillie vers l'extérieur depuis cette surface ; et
le deuxième bras présente une face de verrouillage conjuguée (7), **en ce que**, en au moins une position de verrouillage, les au moins deux ergots de verrouillage de l'élément de verrouillage s'engagent dans des évidements de verrouillage de forme complémentaire, appartenant à la face conjuguée de verrouillage ; et
**en ce que** la direction de mise en prise de l'élément de verrouillage (5) ne coupe pas l'axe de rotation.

2. Joint d'articulation à verrouillage selon la revendication 1, **caractérisé en ce que**, dans le guidage coulissant, est/sont prévue(s) une butée avant et/ou une butée arrière, dans la direction de mise en prise.

3. Joint d'articulation à verrouillage selon la revendication 2, **caractérisé en ce que** la butée avant et/ou la butée arrière est/sont réalisée(s) dans une rainure (9) ménagée dans le guidage coulissant.

4. Joint d'articulation à verrouillage selon la revendication 3, **caractérisé en ce que** l'élément d'encliquetage, sur la face tournée vers la rainure, présente un perçage et **en ce que**, dans ce perçage, est insérée une tige (10), de manière qu'elle coulisse dans la rainure et limite le déplacement de l'élément de verrouillage dans la direction mise en prise, au moyen de la butée avant et/ou de la butée arrière.

5. Joint d'articulation à verrouillage selon la revendication 1, **caractérisé en ce que** l'axe de rotation est disposé en relation de la direction de mise en prise et l'élément de verrouillage, et **en ce que** le deuxième bras peut être tourné par rapport au premier bras, de manière que l'élément de verrouillage puisse être inséré ou enlevé.

6. Joint d'articulation à verrouillage selon au moins l'une des revendications précédentes, **caractérisé en ce que** l'axe de rotation est fixé dans le premier bras.

7. Joint d'articulation à verrouillage selon au moins l'une des revendications précédentes, **caractérisé en ce que** l'élément élastique comprend un ressort à lames, prenant appui dans l'élément de verrouillage et le premier bras, de manière que l'élément de verrouillage exerce une précontrainte dans la direction de mise en prise.

8. Joint d'articulation à verrouillage selon au moins l'une des revendications précédentes, **caractérisé en ce que** l'élément élastique comprend un ressort spiral, prenant appui dans l'élément de verrouillage et le premier bras, de manière qu'il mette sous pré-contrainte l'élément de verrouillage dans la direction de mise en prise.

9. Joint d'articulation à verrouillage selon au moins l'une des revendications précédentes, **caractérisé en ce que** le premier bras, l'élément de verrouillage et l'élément élastique sont réalisés conjointement d'une seule pièce et l'élément élastique est formé par un matériau correspondant et/ou une géométrie correspondante de l'élément de verrouillage.

10. Joint d'articulation à verrouillage selon au moins l'une des revendications précédentes, **caractérisé en ce que** l'élément de verrouillage présente plus de deux ergots de verrouillage (51).

11. Joint d'articulation à verrouillage selon au moins l'une des revendications précédentes, **caractérisé en ce que** la face conjuguée de verrouillage présente plus de deux évidements de verrouillage de formes complémentaires, de manière que les au moins deux ergots de verrouillage de l'élément de verrouillage s'engagent, en plus qu'une position de verrouillage, dans des évidements de verrouillage de forme complémentaire, appartenant à la face conjuguée de verrouillage.

12. Rétroviseur extérieur pour un véhicule automobile, en particulier un véhicule utilitaire ayant une jonction d'articulation à verrouillage selon au moins l'une des revendications 1 à 11, **caractérisé en ce que** le rétroviseur extérieur est fixé sur le premier bras articulé.
